# EUROPÄISCHE PATENTANMELDUNG

(11) **EP 1 973 205 A1**
(43) Veröffentlichungstag der Anmeldung: **24.09.2008**
(21) Anmeldenummer: 07290344.6
(22) Anmeldetag: 19.03.2007
(51) Int. Cl.: H01R 35/00, B60R 16/027

(54) **Baureihe von Vorrichtungen zur Signal- bzw. Stromübertragung zwischen relativ zueinander drehbaren Endstellen**

(71) Anmelder: NEXANS France, 75008 Paris (FR)
(72) Erfinder: Schroer, Frank, 02637 Weiden (DE)
(74) Vertreter: Döring, Roger

(57) **Zusammenfassung**

Es wird eine Baureihe von Vorrichtungen zur Signal- bzw. Stromübertragung zwischen relativ zueinander bewegbaren Endstellen angegeben, zwischen denen mindestens eine in Windungen verlaufende, in einer im wesentlichen kreisförmigen Kassette untergebrachte Flachband-Leitung angeordnet ist, welche mindestens zwei parallel und mit Abstand zueinander in eine Umhüllung aus Isoliermaterial eingebettete elektrische Leiter aufweist, an die an den Endstellen weiterführende Leitungen anschließbar sind. Die Kassette besteht aus einem um ihre Achse drehbaren, mindestens eine der Endstellen tragenden Rotor (15) und einem feststehenden, ebenfalls mindestens eine der Endstellen tragenden Stator (16). Am Rotor (15) und am Stator (16) sind jeweils eine maximale Anzahl von n Endstellen zum Anschließen von n Flachband-Leitungen angebracht. Im Stator (16) ist eine Einrichtung für einen zum Führen der Windungen der Flachband-Leitung gegebenenfalls anzubringenden ringförmigen Führungskörper (19) vorgesehen. Es sind n Vorrichtungen mit Kassetten identischen Aufbaus nebeneinander vorhanden, von denen in einer eine Flachband-Leitung, in einer weiteren mindestens eine Flachband-Leitung mit Führungskörper sowie in den anderen zwei bis n Flachband-Leitungen angebracht sind.

## Beschreibung

Die Erfindung bezieht sich auf eine Baureihe von Vorrichtungen zur Signal- bzw. Stromübertragung zwischen relativ zueinander bewegbaren Endstellen, zwischen denen mindestens eine in Windungen verlaufende, und in einer im wesentlichen kreisförmigen Kassette untergebrachte Flachband-Leitung angeordnet ist, welche mindestens zwei parallel und mit Abstand zueinander in eine Umhüllung aus Isoliermaterial eingebettete elektrische Leiter aufweist, an die an den Endstellen weiterführende Leitungen anschließbar sind, bei welcher die Kassette aus einem um ihre Achse drehbaren, mindestens eine der Endstellen tragenden Rotor und einem feststehenden, ebenfalls mindestens eine der Endstellen tragenden Stator besteht, die einen ringförmigen Wickelraum zur Aufnahme der Flachband-Leitungen zwischen sich einschließen.

Vorrichtungen dieser Baureihe werden beispielsweise für die Übertragung eines Signals zum Auslösen eines "Airbags" für Kraftfahrzeuge benötigt. Eine entsprechende Vorrichtung ist zur Übertragung von elektrischen Signalen aber auch von elektrischem Strom im Lenkrad eines Kraftfahrzeugs untergebracht. Mit einer solchen Vorrichtung kann die Signal- und/oder Stromübertragung zwischen feststehenden und beweglichen Teilen des Kraftfahrzeugs ohne Schleifkontakte bzw. Schleifringe erfolgen. Die darin verwendeten Flachband-Leitungen sind in der Regel als Flachleiter-Bandleitungen ausgeführt. Sie können aber auch runde Leiter haben. Das Wort "Flachband-Leitung" steht für beide Ausführungsformen. Es wird im folgenden mit "FBL" abgekürzt.

Durch die EP 0 417 350 A1 ist eine Vorrichtungen zur kontaktlosen Stromübertragung beispielsweise mittels einer nach Art eines Federhauses zu einem Wickelkörper gewickelten FBL bekanntgeworden. Bei einer relativen Drehbewegung der beiden durch die FBL verbundenen Endstellen, "atmet" die aufgewickelte FBL wie die Feder einer Uhr. Die Windungen der gewickelten FBL werden in der einen Drehrichtung auf einen kleineren Durchmesser zusammengezogen. Sie gehen in der anderen Drehrichtung wieder auf einen größeren Durchmesser auf.

Aus der EP-0 735 631 B1 geht eine andere derartige Vorrichtung hervor, bei welcher die FBL in zwei Teilwicklungen mit gegenläufigem Wickelsinn und einer U-förmigen Umkehrstelle aufgeteilt ist, zwischen denen ein ringförmiger Führungskörper angeordnet ist. Die Umkehrstelle zwischen den Teilwicklungen greift in den Führungskörper ein, der bei einer Drehbewegung des Rotors von den sich bewegenden Teilwicklungen in Umfangsrichtung der Kassette mitgenommen wird. Der Führungskörper dient zur Führung und zur gegenseitigen Abstützung der Teilwicklungen. Er gleitet bei Betätigung der Vorrichtung auf einem entsprechend ausgebildeten Boden des Stators.

Die bekannte Vorrichtung nach der EP 0 556 779 B1 arbeitet ohne einen solchen Führungskörper für die Teilwicklungen. In der Kassette dieser Vorrichtung sind mehrere U-förmige Umkehrstellen aufweisende FBLen angeordnet, die sich gegenseitig abstützen. Dabei liegt jede mit einer größeren Länge einerseits am Rotor und andererseits am Stator der Kassette an.

Es sind somit Vorrichtungen mit unterschiedlichen Aufbauten und unterschiedlichem "Innenleben" bekannt. Dabei ist zusätzlich zu berücksichtigen, daß in den jeweiligen Kassetten unterschiedlich breite FBLen mit unterschiedlichen Leiterzahlen angeordnet sein können. Es muß also eine große Palette von unterschiedlich aufgebauten Kassetten hergestellt werden, mit einer entsprechenden Anzahl unterschiedlicher Werkzeuge. Die unterschiedlich aufgebauten und bestückten Kassetten müssen außerdem vorgehalten werden, wenn alle Kundenwünsche möglichst schnell befriedigt werden sollen. Der Aufwand ist insgesamt entsprechend hoch.

Der Erfindung liegt die Aufgabe zugrunde, eine Baureihe aus eingangs geschilderten Vorrichtungen anzugeben, die bei gleich bleibenden Abmessungen ihrer Kassetten für eine unterschiedliche Anzahl von FBLen einsetzbar ist.

Diese Aufgabe wird gemäß der Erfindung dadurch gelöst,
- daß am Rotor und am Stator jeweils eine maximale Anzahl von n Endstellen zum Anschließen von n FBLen angebracht sind,
- daß im Stator eine Einrichtung für einen zum Führen der Windungen der FBL gegebenenfalls anzubringenden ringförmigen Führungskörper vorgesehen ist und
- daß n Vorrichtungen mit Kassetten identischen Aufbaus nebeneinander vorhanden sind, von denen in einer eine FBL, in einer weiteren mindestens eine FBL mit Führungskörper sowie in den anderen zwei bis n FBLen zwischen den zugehörigen Endstellen angebracht sind.

Mit dieser Baureihe stehen Vorrichtungen für viele unterschiedliche Anforderungen zur Verfügung, deren Kassetten jeweils gleichbleibende Abmessungen und einen identischen Aufbau haben. Sie können -je nach Anforderung - schnell und einfach mit einer gewünschten Ausführungsform der FBL und einer vorgegebenen Anzahl von FBLen bestückt werden. Dabei wird zur Herstellung der Kassette ohne Inhalt nur noch ein einziges Werkzeug benötigt. Die Anzahl der jeweils einzusetzenden FBLen kann so mit Vorteil an den jeweiligen Anwendungsfall angepaßt werden. Die Kassette einer solchen Vorrichtung kann nur eine FBL aufweisen, die nach Art einer Uhrfeder spiralförmig verläuft oder in zwei Teilwicklungen mit Umkehrstelle und dazwischen liegendem Führungskörper aufgeteilt ist. Es können auch zwei jeweils in Teilwicklungen aufgeteilte FBLen vorgesehen sein, mit oder ohne Führungskörper. In weiteren Vorrichtungen sind zwei oder mehr FBLen angeordnet, die jeweils in Teilwicklungen aufgeteilt sind, bis zu einer maximalen Anzahl von n FBLen. Die Zahl "n" ist in sinnvoller Ausführung "5", da bei einer höheren Anzahl von FBLen räumliche Probleme für deren Unterbringung in einer Kassette entstehen können.

Der Erfindungsgegenstand ist in Ausführungsbeispielen in den Zeichnungen dargestellt.

Es zeigen:
Fig. 1 eine Ansicht einer Kassette mit einer Vorrichtung der Baureihe nach der Erfindung in schematischer Darstellung.
Fig. 2 eine gegenüber Fig. 1 abgewandelte Ausführungsform der Kassette.
Fig. 3 bis 6 in schematischer Darstellung Kassetten mit unterschiedlicher Bestückung.

Aufbau und Anordnung einer Vorrichtung mit einer im Lenkrad eines Fahrzeugs zu montierenden Kassette sind grundsätzlich bekannt und beispielsweise in den eingangs erwähnten Schriften beschrieben. Auf entsprechende Einzelheiten wird deshalb hier nicht weiter eingegangen. Statt des Wortes "Vorrichtung" wird im folgenden der Einfachheit halber das Wort "Kassette" verwendet.

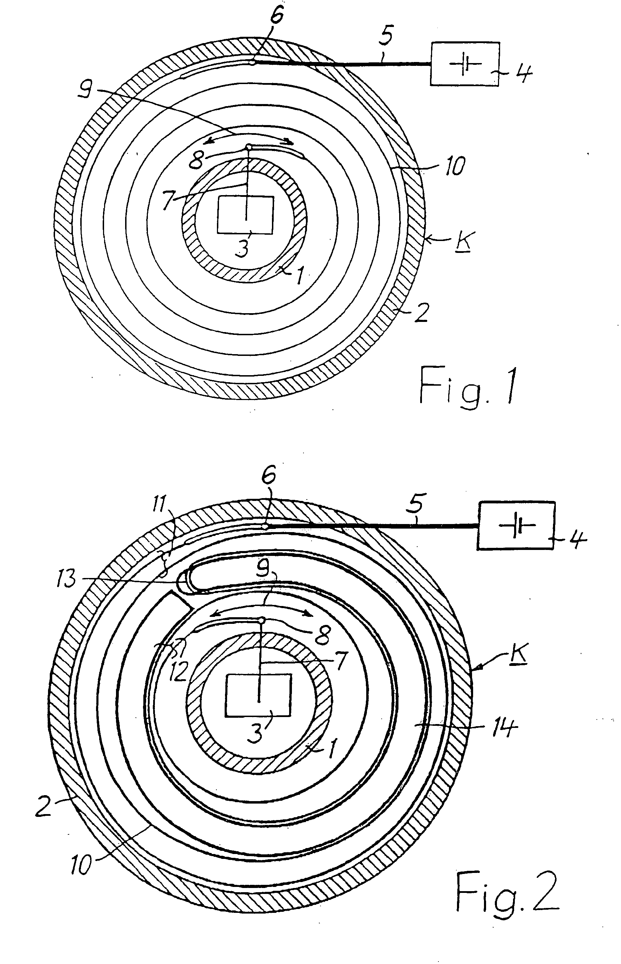

In Fig. 1 sind schematisch zwei beispielsweise kreisförmig ausgebildete Wände 1 und 2 einer Kassette K dargestellt. Sie ist für den Einbau in das Lenkrad eines Kraftfahrzeugs bestimmt. Zur Stromversorgung einer Elektronik 3, durch deren Signal ein Airbag ausgelöst werden kann, ist die Kassette K an eine Batterie 4 des Kraftfahrzeugs angeschlossen. Die Batterie 4 ist über eine elektrische Leitung 5 mit einer als Festpunkt ausgeführten Endstelle 6 der Kassette K verbunden. Die Elektronik 3 ist über eine elektrische Leitung 7 an eine Endstelle 8 der Kassette K angeschlossen, die in Richtung des Doppelpfeiles 9 bewegbar ist. Grundsätzlich könnten auch die Endstelle 8 feststehend und die Endstelle 6 bewegbar ausgeführt sein. Es könnten auch beide Endstellen 6 und 8 bewegbar sein. Zwischen den beiden Endstellen 6 und 8 ist eine FBL 10 mit mindestens zwei elektrischen Leitern angebracht.

Die FBL 10 kann gemäß Fig. 1 in der Kassette K zwischen den beiden Endstellen 6 und 8 in mehreren Windungen, also nach Art eines Federhauses von Uhren, angeordnet sein. Obwohl die Anzahl der Umdrehungen eines Lenkrades auf etwa sechs Umdrehungen begrenzt ist, sollen mehr als sechs Windungen für die FBL 10 vorgesehen sein. Die Drehbewegung der Endstelle 8 macht sich dann für eine einzelne Windung der FBL 10 nicht wesentlich bemerkbar. Es wird lediglich der Durchmesser des aus allen Windungen der FBL 10 bestehenden Wickelkörpers verkleinert bzw. vergrößert.

Die FBL 10 kann gemäß Fig. 2 in der Kassette K auch in Windungen angeordnet sein, die in einen äußeren Wickelbereich 11 und einen inneren Wickelbereich 12 unterteilt sind. Die beiden Wickelbereiche 11 und 12 sind durch Klammern gekennzeichnet. Sie umfassen in der aus Fig. 2 ersichtlichen Mittelstellung bzw. in der Montageposition der Kassette K jeweils zwei bis drei Windungen. In den beiden Wickelbereichen 11 und 12 haben die Windungen der FBL 10 entgegengesetzte Wickelrichtungen. Die Wickelbereiche 11 und 12 sind durch eine etwa U-förmig ausgeführte Umkehrstelle 13 miteinander verbunden. Zwischen den beiden Wickelbereichen 11 und 12 ist ein einteiliger, ringförmig ausgeführter Führungskörper 14 angebracht, der die Umkehrstelle 13 umfaßt. Diese Ausführungsform der Kassette K wird im folgenden als "Kassette K in Umkehrtechnik" bezeichnet.

Der Führungskörper 14 ist um seinen Mittelpunkt drehbar und in Umfangsrichtung der Kassette K, also in Richtung des Doppelpfeils 9, leicht beweglich. Erkann als geschlossener Ring mit einem Durchlaß für die Umkehrstelle 13 der FBL 10 ausgeführt sein. Er kann aber auch ein offener Ring sein, der sich nahezu über 360° erstreckt, so wie es in Fig. 2 dargestellt ist. Der Führungskörper 14 besteht vorzugsweise aus Kunststoff. Er ist dadurch leicht, so daß er leichtgängig in der Kassette K bewegt werden kann.

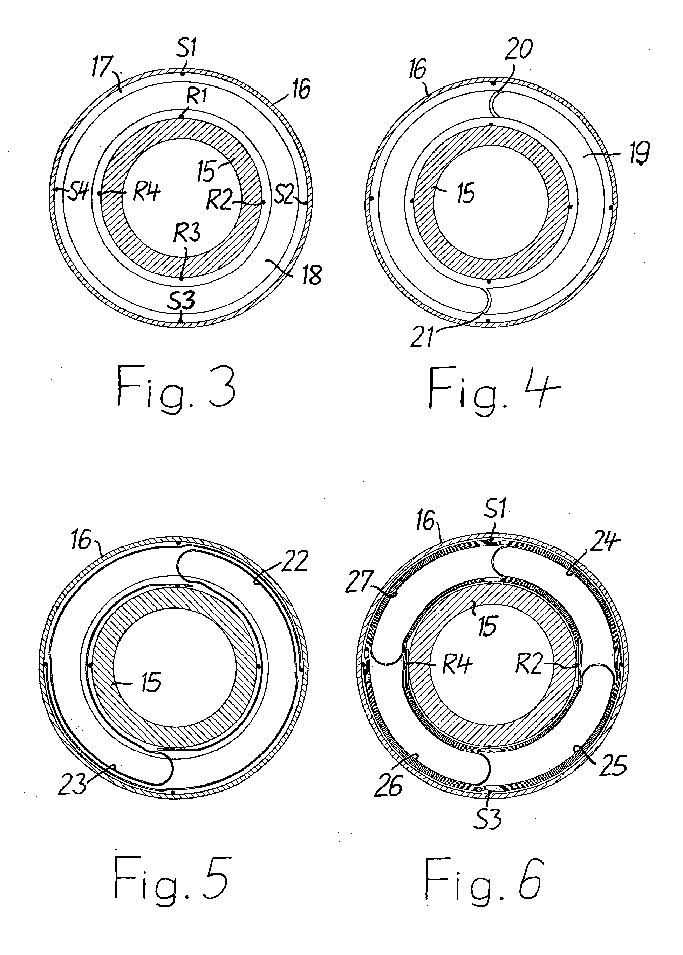

Im folgenden wird der Aufbau einer Kassette K für die Baureihe nach der Erfindung anhand von Fig. 3 grundsätzlich erläutert. Dabei sind die Endstellen, an denen die einzelnen FBLen enden, der Übersichtlichkeit halber in Umfangsrichtung versetzt für Rotor und Stator der Kassette K eingezeichnet. Die Endstellen des Rotors einerseits und des Stators andererseits sind in praktischer Ausführung jeweils an einer Stelle oder auch an zwei Stellen beispielsweise in einem Teil eines Steckverbinders zusammengefaßt, damit weiterführende Leitungen beispielsweise mittels eines Steckers angeschlossen werden können.

Fig. 3 zeigt eine Draufsicht auf eine Kassette K im Schnitt, wobei nur die für das Verständnis der Erfindung erforderlichen Teile dargestellt sind. Der Rotor 15 der Kassette K entspricht der Wand 1 in den Fig. 1 und 2. Er trägt im dargestellten Ausführungsbeispiel vier in Umfangsrichtung gegeneinander versetzte, durch Punkte angedeutete Endstellen R1, R2, R3 und R4. Der der Wand 2 gemäß Fig. 1 und 2 entsprechende Stator 16 trägt ebenfalls vier, durch Punkte angedeutete Endstellen S1, S2, S3 und S4. Jede in einer Kassette K eingesetzte FBL ist mit je einer der Endstellen des Rotors 15 und des Stators 16 verbunden und in denselben elektrisch leitend so angeschlossen, daß weiterführende Leitungen elektrisch leitend anschließbar sind.

Auf einem Boden 17 des Stators 16 ist eine kreisförmig umlaufende Vertiefung 18 angedeutet, in welcher ein aus Fig. 4 erkennbarer kreisförmiger Führungskörper 19 gleiten kann, welcher dem Führungskörper 14 in Fig. 2 entspricht. Der Führungskörper 19 hat zwei Durchgangsstellen 20 und 21 zum Durchführen der U-förmigen Umkehrstelle zweier FBLen 22 und 23 (Fig. 5) einer Kassette K in Umkehrtechnik, wenn dieselbe mit zwei FBLen bestückt ist. Der Führungskörper 19 ist auch dann einsetzbar, wenn nur eine FBL in die Kassette K eingebaut wird.

In der Baureihe der Kassetten K nach der Erfindung kann dieselbe in zwei einfachen Ausführungen mit einer spiralförmig verlaufenden FBL 10 nach Fig. 1 oder in Umkehrtechnik mit einer FBL 10 nach Fig. 2 bestückt sein.

Eine weitere Kassette K der Baureihe weist in Umkehrtechnik gemäß Fig. 5 die beiden FBLen 22 und 23 auf, die - so wie dargestellt - sich ohne den Führungskörper 19 in den Umkehrstellen gegenseitig stützen. Die FBLen 22 und 23 können aber auch zusammen mit dem Führungskörper 19 gemäß Fig. 4 in einer weiteren Kassette K der Baureihe untergebracht sein.

Neben diesen vier Aufbauten der Kassette K sind in der Baureihe gemäß der Erfindung drei weitere Aufbauten in Umkehrtechnik vorhanden, wenn die maximale Anzahl von einzusetzenden FBLen mit "5" angenommen wird. Das sind je eine Kassette K mit drei FBLen, mit vier FBLen und mit fünf FBLen. Von diesen drei zwar identisch aufgebauten, aber unterschiedlich bestückten Kassetten K ist in Fig. 6 nur noch die Ausführung mit vier FBLen 24, 25, 26 und 27 dargestellt. Dabei sind jeweils zwei der FBLen an ihren inneren Enden zusammengefaßt und gemeinsam an die Endstelle R2 einerseits und R4 andererseits angeschlossen.

## Patentansprüche

1. Baureihe von Vorrichtungen zur Signal- bzw. Stromübertragung zwischen relativ zueinander bewegbaren Endstellen, zwischen denen mindestens eine in Windungen verlaufende, in einer im wesentlichen kreisförmigen Kassette untergebrachte Flachband-Leitung angeordnet ist, welche mindestens zwei parallel und mit Abstand zueinander in eine Umhüllung aus Isoliermaterial eingebettete elektrische Leiter aufweist, an die an den Endstellen weiterführende Leitungen anschließbar sind, bei welcher die Kassette aus einem um ihre Achse drehbaren, mindestens eine der Endstellen tragenden Rotor und einem feststehenden, ebenfalls mindestens Endstellen tragenden Stator besteht, die einen ringförmigen Wickelraum zur Aufnahme der Flachband-Leitungen zwischen sich einschließen, **dadurch gekennzeichnet,**
- **daß** am Rotor (15) und am Stator (16) jeweils eine maximale Anzahl von n Endstellen zum Anschließen von n Flachband-Leitungen angebracht sind,
- **daß** im Stator (16) eine Einrichtung für einen zum Führen der Windungen der Flachband-Leitung gegebenenfalls anzubringenden ringförmigen Führungskörper (19) vorgesehen ist und
- **daß** n Vorrichtungen mit Kassetten (K) identischen Aufbaus nebeneinander vorhanden sind, von denen in einer eine Flachband-Leitung, in einer weiteren mindestens eine Flachband-Leitung mit Führungskörper sowie in den anderen zwei bis n Flachband-Leitungen angebracht sind.

2. Baureihe nach Anspruch 1, **dadurch gekennzeichnet, daß** die Endstellen des Rotors (15) einerseits und des Stators (16) andererseits jeweils an einer Stelle in einem Teil eines Steckverbinders zusammengefaßt sind.

3. Baureihe nach Anspruch 1, **dadurch gekennzeichnet, daß** die Endstellen des Rotors (15) einerseits und des Stators (16) andererseits jeweils an zwei Stellen in einem Teil eines Steckverbinders zusammengefaßt sind.
